# EUROPEAN PATENT APPLICATION

(11) **EP 4 425 743 A1**
(43) Date of publication of application: **04.09.2024**
(21) Application number: 24159741.8
(22) Date of filing: 26.02.2024
(51) Int. Cl.: H02J 7/00, H01M 10/42

(54) **APPARATUS AND A METHOD FOR MANAGEMENT OF SODIUM-BASED RECHARGEABLE BATTERIES**

(30) Priority: 28.02.2023 US 202363487291 P; 09.05.2023 US 202363500957 P; 22.02.2024 US 202418584478
(71) Applicant: Videndum Production Solutions Inc., Shelton, CT 06484 (US)
(72) Inventor: PASKO, David, Shelton, 06484 (US); HUTTON, Andrew, Shelton, 06484 (US)
(74) Representative: ATIP

(57) **Abstract**

An audio/visual environment (100, 200, 800) includes a sodium-based battery assembly (102, 202, 802). The battery assembly includes a sodium-based cell array (110, 808), a battery connector (126), an interface (120, 136, 816), protection circuitry (124), at least one sensor (118), and at least one processor (106). The cell array includes at least one sodium-based cell (112, 113, 114, 810, 811, 812, 813, N) that is configured to utilize sodium ions as charge carriers during charge and discharge. The battery connector is configured to electrically connect the cell array with external devices. The protection circuitry electrically couples the battery connector to the cell array and is configured to electrically decouple the cell array from the battery connector in response to an electrical fault. The at least one sensor is configured to measure status information of the cell array and/or the battery assembly. The at least one processor is configured to identify, utilizing the at least one sensor, the status information, and transmit, utilizing the interface, the status information to an external device.

## Description

### BACKGROUND

The field of the disclosure relates to rechargeable battery systems, and in particular, to battery assemblies and equipment that utilize sodium-based cell technologies.

Direct current (DC) powered devices, such as lighting and cameras, are widely used in film and television production sets. Typically, these DC powered devices are supplied by rechargeable portable batteries, which, for example, may vary in size, weight, and capacity depending on the run-time needed to support the DC powered devices and the type of cell chemistry in use. Often, rechargeable portable batteries used on a production set utilize nickel-metal hydride or lithium-ion, each of which can present their own set of drawbacks. For example, nickel-metal hydride based rechargeable battery packs often provide a lower capacity for a similar size and weight as compared to lithium-ion based rechargeable battery packs, as nickel-metal hydride chemistries exhibit a lower energy density as compared to lithium-ion chemistries. However, lithium-ion based rechargeable battery packs are generally more expensive as compared to their comparable capacity nickel-metal hydride batteries, due to the high cost of lithium and lithium-based compounds used in lithium-ion batteries.

Sodium-based batteries are attractive for rechargeable battery systems, and especially for still picture, film, and television production sets, due to their use of abundant and inexpensive materials as compared to, for example, lithium-ion batteries. Sodium-based cells, however, exhibit different charge-discharge profiles, different cell impedances, different cell voltage ranges during charge-discharge, and potentially exhibit much higher maximum cell currents during charge-discharge as compared to lithium-ion cells or other cell chemistries. Thus, it is impractical to simply utilize off-the-shelf integrated circuits and control schemes to implement a rechargeable battery system that utilizes sodium-based cells rather than another battery chemistry currently in use, such as lithium-ion.

Further, production equipment such as cameras, lighting, video prompters, robotic motion systems for cameras, etc., are widely used in still picture, film, and television production sets. Often, these types of devices are DC powered or utilize alternating current (AC) power with rechargeable battery backup systems. The rechargeable batteries may be permanently integrated within the production equipment or removable from the production equipment, and the batteries may vary in size, weight, and capacity depending on the run-time needed to support the production equipment and the type of cell chemistry in use. Further, rechargeable batteries used for production equipment often utilize nickel-metal hydride or lithium-ion, each of which can present their own sets of drawbacks as described above.

Thus, it would be desirable to provide mechanisms for implementing sodium-based cells in rechargeable battery systems, and/or within production equipment, especially for rechargeable battery systems in use on still picture, film, and television production sets, as solutions that are tailored to other types of battery cell chemistries are generally incompatible with sodium-based cells.

### BRIEF DESCRIPTION

In one aspect, an audio/visual environment is provided. The audio/visual environment includes a sodium-based battery assembly. The sodium-based battery assembly includes a sodium-based cell array, a battery connector, at least one interface, protection circuitry, at least one sensor, and at least one processor. The sodium-based cell array includes at least one sodium-based cell, where the at least one sodium-based cell is configured to utilize sodium ions as charge carriers during charge and discharge. The battery connector is configured to electrically connect the sodium-based cell array with devices external to the sodium-based battery assembly. The protection circuitry electrically couples the battery connector to the sodium-based cell array, where the protection circuitry is configured to electrically decouple the sodium-based cell array from the battery connector in response to an electrical fault. The at least one sensor is configured to measure status information of at least one of the sodium-based cell array and the sodium-based battery assembly. The at least one processor is configured to identify, utilizing the at least one sensor, the status information, and transmit, utilizing the at least one interface, the status information to at least one device external to the sodium-based battery assembly.

In another aspect, a method operable by a sodium-based battery assembly of an audio/visual environment is provided. The sodium-based battery assembly includes a sodium-based cell array, a battery connector, at least one interface, protection circuitry, and at least one sensor. The sodium-based cell array includes at least one sodium-based cell, where the at least one sodium-based cell is configured to utilize sodium ions as charge carriers during charge and discharge. The battery connector is configured to electrically connect the sodium-based cell array with devices external to the sodium-based battery assembly. The protection circuitry electrically couples the battery connector to the sodium-based cell array, where the protection circuitry is configured to electrically decouple the sodium-based cell array from the battery connector in response to an electrical fault. The at least one sensor is configured to measure status information of at least one of the sodium-based cell array and the sodium-based battery assembly. The method includes identifying, utilizing the at least one sensor, the status information, and transmitting, utilizing the at least one interface, the status information to at least one device external to the sodium-based battery assembly.

In another aspect, an audio/visual environment is provided. The audio/visual environment includes a management system, production equipment, a charger, and a sodium-based battery assembly configured to be disposed within the production equipment. The sodium-based battery assembly includes a sodium-based cell array, a battery connector, at least one interface, protection circuitry, at least one sensor, a memory, and at least one processor. The sodium-based cell array includes at least one sodium-based cell, where the at least one sodium-based cell is configured to utilize sodium ions as charge carriers during charge and discharge. The battery connector is configured to electrically connect the sodium-based cell array with the charger and the production equipment. The at least one interface is configured to communicatively couple with the charger and the management system. The protection circuitry electrically couples the battery connector to the sodium-based cell array, where the protection circuitry is configured to electrically decouple the sodium-based cell array from the battery connector in response to an electrical fault. The at least one sensor is configured to measure status information of at least one of the sodium-based cell array and the sodium-based battery assembly. The memory is configured to store a sodium-based charge algorithm. The at least one processor is configured to communicate, utilizing the at least one interface, with the charger to control charging of the sodium-based cell array based on the status information and the sodium-based charge algorithm, and transmit, utilizing the at least one interface, the status information to at least one of the production equipment and the management system.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 depicts a block diagram of an audio/visual environment that utilizes a sodium-based battery assembly as a rechargeable portable power solution in an exemplary embodiment.
FIG. 2 depicts a block diagram of an audio/visual environment that utilizes a sodium-based battery assembly as a rechargeable portable power solution in another exemplary embodiment.
FIG. 3 depicts a flow chart of a method operable by a sodium-based battery assembly of an audio/visual environment in an exemplary embodiment.
FIGS. 4-7 depict additional details of the method of FIG. 3 in exemplary embodiments.
FIG. 8 depicts a block diagram of another audio/visual environment that utilizes another sodium-based battery assembly as a rechargeable power solution for production equipment in an exemplary embodiment.
FIG. 9 depicts a flow chart of another method operable by a sodium-based battery assembly of an audio/visual environment in an exemplary embodiment.
FIGS. 10-12 depict additional details of the method of FIG. 9 in exemplary embodiments.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a," "an," and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the terms "processor" and "computer," and related terms, e.g., "processing device," "computing device," and "controller" are not limited to just those integrated circuits referred to in the art as a computer, but broadly refers to a microcontroller, a microcomputer, an analog computer, a programmable logic controller (PLC), an application specific integrated circuit (ASIC), and other programmable circuits, and these terms are used interchangeably herein. In the embodiments described herein, "memory" may include, but is not limited to, a computer-readable medium, such as a random-access memory (RAM), a computer-readable non-volatile medium, such as a flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a touchscreen, a mouse, and a keyboard. Alternatively, other computer peripherals may also be used that may include, for example, but not be limited to, a scanner. Furthermore, in the example embodiment, additional output channels may include, but not be limited to, an operator interface monitor or heads-up display. Some embodiments involve the use of one or more electronic or computing devices. Such devices typically include a processor, processing device, or controller, such as a general-purpose central processing unit (CPU), a graphics processing unit (GPU), a microcontroller, a reduced instruction set computer (RISC) processor, an ASIC, a programmable logic controller (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are not intended to limit in any way the definition and/or meaning of the term processor and processing device.

A sodium-based battery is a type of rechargeable battery that uses sodium ions as charge carriers. Some examples of sodium-based rechargeable batteries include molten-sodium batteries, sodium-sulfur batteries, sodium-nickel chloride batteries, and sodium-ion batteries.

Sodium-based batteries are a desirable alternative to lithium-ion batteries, due to the lower cost and higher availability of sodium as compared to lithium. Sodium-ion cells utilize a cathode that includes a sodium containing material, an anode, a porous separator between the cathode and the anode, and typically, a liquid electrolyte. The liquid electrolyte may comprise, for example, sodium salts in polar protic or aprotic solvents. When charging a sodium-ion cell, sodium ions move from the cathode to the anode. The opposite occurs during discharge. One example of an anode for sodium-ion cells includes hard carbon, although other anode materials have been used including sodium intercalating materials such as Na₂Ti₃O₇, Na₃Ti₂(PO₄)₃, and nickel alloys. Some examples of cathodes for sodium-ion cells include layered transition metal oxides, transition metal fluorophosphates, and Prussian blue and its analogues. Sodium-ion cells may utilize aqueous and non-aqueous electrolytes in various implementations. Some examples of non-aqueous electrolytes include ethylene carbonate, dimethyl carbonate, diethyl carbonate, and propylene carbonate, with sodium hexafluorophosphate as the salt dissolved in a mixture of one or more of these solvents being more widely used.

Due to the wide range of cathode, anode, and electrolyte chemistries that are currently being investigated for sodium-ion cells, the performance of sodium-ion cells can vary substantially from other more common cell chemistries, such as lithium-ion. For example, lithium-ion cells typically exhibit a mostly flat charge-discharge voltage profile, which may be different for sodium-ion cells depending on their chemistry. For example, when NaCoO₂ cathodes are used in sodium-ion cells, the charge-discharge voltage can follow a stepwise voltage profile due to multiple phase changes of the NaCoO₂ crystals as sodium is deintercalated from the cathode during charge, and vice versa during discharge. The result is that typical lithium-ion charge-discharge circuits and algorithms may not readily apply to batteries that utilize sodium-ion cells. Further, although the voltage of a sodium-ion cell can be similar to lithium-ion in their operation range, some sodium-ion cells have exhibited lower cell voltages depending on the materials used to form the sodium-ion cell.

In addition, sodium-ion cells may exhibit different cell impedances that vary over their charge-discharge curves as compared to lithium-ion cells, which may make sodium-ion cells incompatible with state-of-charge circuits and algorithms that rely on the typical lithium-ion impedance changes during charge-discharge in cells in order to determine the current capacity of a cell or battery pack. Further, sodium-ion cells may exhibit different cell impedances over their cycle life as compared to lithium-ion cells, which may make sodium-ion cells incompatible with cycle life circuits and algorithms that rely on the typical lithium-ion impedance changes over the cycle life of the cells in order to estimate the end of life of the cells.

While a common "18650" cell format that utilities lithium as the charge carriers may exhibit an impedance when fully charged from about "20" milliohms to about "35" milliohms, the same "18650" cell format that utilizes sodium as the charge carriers may exhibit an impedance when fully charged of around "0.1" milliohm. The reduced cell impedance of sodium-ion cells as compared to lithium-ion cells may result in very high currents rates (di/dt) when battery packs that utilize sodium-ion cells are shorted, the result of which is that typical battery protection circuits that are designed based on lithium-ion cells can fail to properly engage to terminate the short-circuit condition. Failure can potentially result in thermal and/or current damage to the protection circuits or other components of the sodium-ion battery pack due to the high transient short-circuit currents.

Embodiments of the present disclosure describe sodium-based battery assemblies and methods of operating sodium-based battery assemblies the mitigate these and other issues as outlined below.

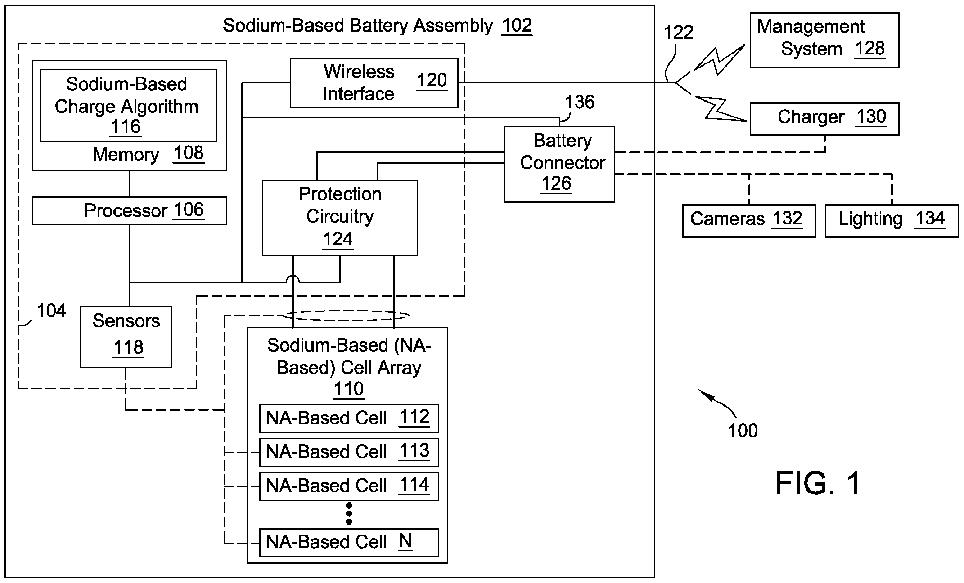

FIG. 1 depicts a block diagram of an audio/visual environment 100 that utilizes a sodium-based battery assembly 102 as a rechargeable portable power solution in an exemplary embodiment. Audio/visual environment 100 may comprise, for example, a still picture, film, a television production environment, and/or a performance environment (e.g., a concert), etc.

Battery assembly 102 comprises any component, system, or device that performs the functionality described herein for battery assembly 102. Battery assembly 102 will be described with respect to various discrete elements, which perform functions. These elements may be combined in different embodiments, segmented into different discrete elements in other embodiments, or removed in some embodiments.

In this embodiment, battery assembly 102 includes a controller 104, which manages the operation of battery assembly 102. In this embodiment, controller 104 includes one or more processors 106 communicatively coupled to at least one memory 108. In some embodiments, processor 106 executes programmed instructions (e.g., which may be stored at memory 108) in order to perform the functionality described herein for controller 104. In other embodiments, processor 106 and/or memory 108 may comprise logic that implements the functionality described herein for controller 104.

In this embodiment, battery assembly 102 further includes a sodium-based cell array 110, which comprises one or more sodium-based cells 112, 113, 114, N. In one embodiment, sodium-based cells 112, 113, 114, N comprise sodium-ion cells. In another embodiments, sodium-based cells 112, 113, 114, N comprise molten-sodium cells, sodium-sulfur cells, sodium-nickel chloride cells, or other types of cell chemistries that utilize sodium as an electrode material and/or charge carrier.

Sodium-based cells 112, 113, 114, N may be fabricated utilizing any of the previously described anodes, cathodes, and electrolytes, or may be fabricated using other anodes, other cathodes, and/or other electrolytes not described but that are suitable for a sodium-based electrochemical cell. Sodium-based cells 112, 113, 114, N may be electrically arranged in various series and/or parallel combinations in order to output a range of desired voltages and provide a desired energy storage capacity. Although four sodium-based cells 112, 113, 114, N are disclosed in the current embodiment, any suitable number of sodium-based cells 112, 113, 114, N may be included in battery assembly 102 in other embodiments. Sodium-based cells 112, 113, 114, N may, for example, comprise "18650" format cells that enable sodium-based cells 112, 113, 114, N to be retrofitted within existing lithium-ion battery packs and/or nickel-metal hydride battery packs without significant mechanical changes to the battery packs, although the charging algorithms and/or the protections circuits may change due to the inherent differences between sodium-based cells 112, 113, 114, N and lithium-ion cells and/or nickel-metal hydride cells.

In this embodiment, a sodium-based charge algorithm 116 is stored in memory 108 of battery assembly 102. In this embodiment, at least, sodium-based charge algorithm 116 is used by processor 106 to manage and control the charge of sodium-based cell array 110. Sodium-based charge algorithm 116 may, for example, define the acceptable ranges of charge currents, charge voltages, charge temperatures, etc., for sodium-based cell array 110 during a charging operation.

In this embodiment, battery assembly 102 further includes one or more sensors 118, a wireless interface 120 communicatively coupled to an antenna 122, protection circuitry 124, and a battery connector 126. Antenna 122 may be external to battery assembly 102 and/or internal to battery assembly 102 in different embodiments.

Sensors 118 of battery assembly 102 monitor various dynamic parameters of sodium-based cell array 110 and the operational status of battery assembly 102, referred to collectively herein as status information. The status information may include one or more of the voltage of sodium-based cell array 110, a charge current of sodium-based cell array 110, a discharge current of sodium-based cell array 110, a time to charge sodium-based cell array 110, a time to discharge sodium-based cell array 110, a number of charge-discharge cycles of sodium-based cell array 110, the cell voltages of sodium-based cell array 110, a temperature of sodium-based cell array 110, system faults at battery assembly 102, including for example, overcurrent faults, overcharge faults, over discharge faults, protection events generated by protection circuitry 124, etc. In some embodiments, processor 106 time-stamps and logs the status information in memory 108, for later retrieval and analysis. For example, processor 106 may log days, months, or years of status information at memory 108, which allows for a detailed analysis of battery assembly 102 over its useful life.

Wireless interface 120 may include, for example, Wi-Fi interfaces, Bluetooth interfaces, near field communication (NFC) interfaces, and combinations thereof. In this embodiment, battery assembly 102 communicates, utilizing wireless interface 120, with a management system 128 of audio/visual environment 100. Battery assembly 102 may communicate with management system 128 and provide, for example, the status information related to the health and operation of battery assembly 102 previously described above.

Protection circuitry 124 of battery assembly 102 protects sodium-based cell array 110 from various electrical hazards that may occur, including shorts, over charge conditions, over discharge conditions, excessive currents, etc. Generally, protection circuitry 124 is a high-bandwidth protection device that operates to quickly disconnect sodium-based cell array 110 from battery connector 126 (or other portions of controller 104) in the event of faults. As discussed briefly above, the output impedance of sodium-based cell array 110 when sodium-ion is used is significantly lower than traditional lithium-ion batteries, and therefore, protection circuitry 124 is designed to be able to quickly detect high di/dt events and terminate the fault without damaging sodium-based cell array 110 or other components in the fault current path through battery assembly 102.

Battery connector 126 of battery assembly 102 provides an unregulated output voltage that substantially follows the voltage of sodium-based cell array 110, with the electrical path between battery connector 126 and sodium-based cell array 110 generally designed with as little resistance as possible (to reduce parasitic losses). Battery connector 126 may be connected to a charger 130 of audio/visual environment 100 to recharge sodium-based cell array 110, and/or to external DC loads of audio/visual environment 100 such as cameras 132 and lighting 134. Generally, external DC loads such as cameras 132 and lighting 134 operate within the designed voltage range of sodium-based cell array 110 over its discharge curve. Charger 130 may be electrically coupled to battery connector 126 utilizing power and ground conductors (not shown), which provide a low impedance charging path from charger 130 to battery connector 126. In some embodiments, charger 130 communicates with processor 106 of controller 104 utilizing a wired interface 136, which may be included as one or more pins on battery connector 126, in order to coordinate charging of sodium-based cell array 110. Wired interface 136 may be used by charger 130, for example, in addition to or instead of, wireless interface 120 in some embodiments. Wired interface 136 may comprise a 1-wire communication channel or a multi-wire communication channel in different embodiments. In some embodiments, wired interface 136 implements I2C-based protocols (e.g., system management bus (SMBUS)).

When charger 130 is electrically coupled to battery connector 126, processor 106 communicates with charger 130 utilizing wireless interface 120 and/or wired interface 136 to control the charging of sodium-based cell array 110 based on the status information and sodium-based charge algorithm 116. In one embodiment, processor 106 requests, utilizing wireless interface 120 and/or wired interface 136, that charger 130 provide a pre-defined voltage or voltage range for charging sodium-based cell array 110, with processor 106 controlling a DC-to-DC converter of controller 104 (not shown) to charge sodium-based cell array 110 based on sodium-based charge algorithm 116. In another embodiment, processor 106 requests, utilizing wireless interface 120 and/or wired interface 136, that charger 130 implement a pre-defined charging profile for sodium-based cell array 110, which is based on sodium-based charge algorithm 116. For example, processor 106 may transmit, utilizing wireless interface 120 and/or wired interface 136, a unique identifier (ID), which may be used by charger 130 to implement sodium-based charge algorithm 116 when charging sodium-based cell array 110. In another example, processor 106 may transmit, utilizing wireless interface 120 and/or wired interface 136, sodium-based charge algorithm 116 to charger 130, which is used by charger 130 to charge sodium-based cell array 110. In yet another example, processor 106 may transmit, utilizing wireless interface 120 and/or wired interface 136, different requests to charger 130 over time that direct charger 130 to dynamically vary the charging current and/or the charging voltage supplied by charger 130 to battery connector 126 in order to follow, at least in part, sodium-based charge algorithm 116.

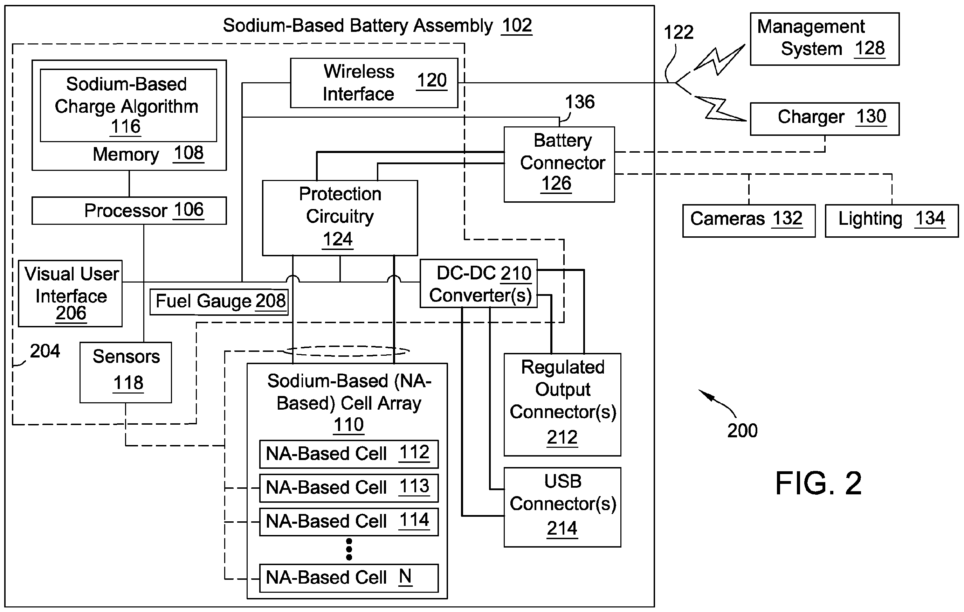

FIG. 2 depicts a block diagram of an audio/visual environment 200 that utilizes a sodium-based battery assembly 202 as a rechargeable portable power solution in another exemplary embodiment. Audio/visual environment 200 may comprise, for example, a still picture, film, a television production environment, and/or a performance environment (e.g., a concert), etc.

In this embodiment, battery assembly 202 includes a controller 204, which manages the operation of battery assembly 202. In this embodiment, controller 204 includes similar elements that were previously described with respect to FIG. 1, and the similar elements may operate in a similar manner as previously described for FIG. 1. In this embodiment, controller 204 further includes a visual user interface 206, a fuel gauge 208, one or more DC-DC converters 210, one or more regulated output connectors 212, and one or more universal serial bus (USB) connectors 214. In some embodiments, camera 132 and/or lighting 134 may be electrically coupled to regulated output connectors 212 instead of battery connector 126 if camera 132 and/or lighting 134 require a regulated DC output voltage to operate correctly.

Visual user interface 206 of battery assembly 202 provides an end-user of battery assembly 202 with the current status of battery assembly 202. For example, visual user interface 206 may include a visual display area (e.g., a liquid crystal display (LCD)) that displays text and/or graphics to the end-user, a light emitting diode (LED) array that displays charge and/or discharge and/or capacity information to the end-user utilizing LEDs, etc. Visual user interface 206 may provide some or all of the status information provided to management system 128 to the end-user. In some embodiments, visual user interface 206 includes one or more buttons (not shown) which allows the end-user to move through different displays of information regarding the status and operation of battery assembly 202.

Fuel gauge 208 of battery assembly 202 provides controller 104 information regarding the state of charge of sodium-based cell array 110. In some embodiments, fuel gauge 208 utilizes a charge counter to measure the charge added to and removed from sodium-based cell array 110, which is indicative of the state of charge of sodium-based cell array 110. In other embodiments, fuel gauge 208 utilizes other mechanisms to derive the state of charge of sodium-based cell array 110, such as the impedance of sodium-based cell array 110, the voltage of sodium-based cell array 110, etc. In some embodiments, processor 106 may calculate the state of charge of sodium-based cell array 110 using information from fuel gauge 208 along with other secondary factors, such as the charging efficiency of sodium-based cell array 110, which may vary over voltage and/or the number of charge-discharge cycles for sodium-based cell array 110, the temperature of sodium-based cell array 110, the discharge efficiency of sodium-based cell array 110, which may vary over voltage and/or the number of charge-discharge cycles for sodium-based cell array 110, etc.

DC-DC converters 210 of battery assembly 202 provide DC voltage translations for output at regulated output connectors 212 for external loads that are intolerant of the voltage variations and/or the voltage at battery connector 126. DC-DC converters 210 may comprise boost converters, buck converters, single-ended primary-inductor converter (SEPIC), or combinations thereof. DC-DC converters 210 may be unidirectional, bidirectional, or combinations thereof. When bi-directional, DC-DC converters 210 may be used to charge sodium-based cell array 110 utilizing power supplied to USB connectors 214 by an external power supply with a USB charging connector. USB connectors 214 may be used, for example, to charge external devices that include a corresponding USB receptacle or induction charging system, such as smart phones, smart watches, tablets, etc. In some embodiments, processor 106 varies the operation of DC-DC converters 210 to control the charge of sodium-based cell array 110 (e.g., when charger 130 simply provides a pre-defined voltage or voltage range at battery connector 126, and battery assembly 202 manages the charge of sodium-based cell array 110 utilizing sodium-based charge algorithm 116 as previously described).

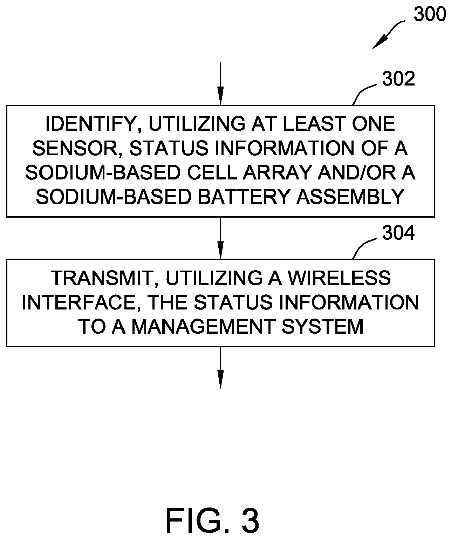

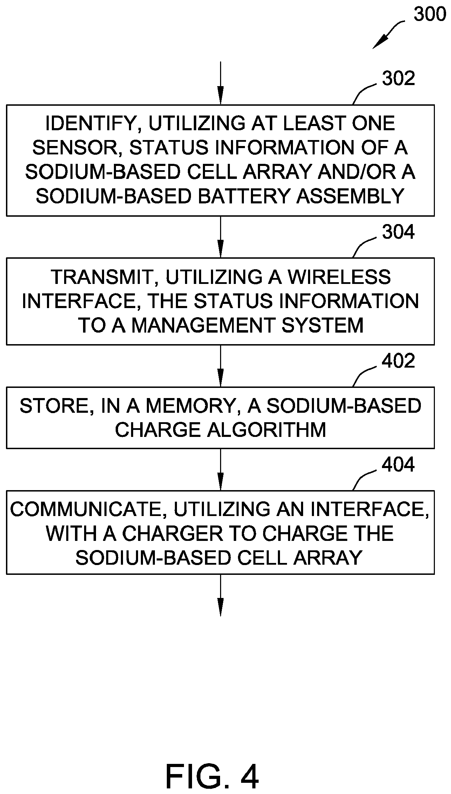

FIG. 3 depicts a flow chart of a method 300 operable by a sodium-based battery assembly of an audio/visual environment in an exemplary embodiment. FIGS. 4-7 depict additional details of method 300 in exemplary embodiments. Method 300 will be discussed with respect to audio/visual environment 100 and battery assembly 102 of FIG 1 and/or audio/visual environment 200 and battery assembly 202 of FIG. 2, although method 300 may be performed by other systems, not shown.

Method 300 begins in this embodiment by identifying 302, utilizing at least one sensor of a battery assembly, status information of at least one of a sodium-based cell array of the battery assembly and the battery assembly itself. For example, processor 106 utilizes sensors 118 to recover information regarding the health and operation of battery assembly 102, battery assembly 202, and/or sodium-based cell array 110 (see FIGS. 1 and 2). The status information may include any of the status information previously described.

Method 300 continues in this embodiment by transmitting 304, utilizing a wireless interface of the battery assembly, the status information to a management system. For example, processor 106 utilizes wireless interface 120 to transmit the status information to management system 128 (see FIGS. 1 and 2).

In an optional embodiment, method 300 continues by displaying, utilizing a visual user interface of the battery assembly, at least a portion of the status information to an end-user. For example, processor 106 utilizes visual user interface 206 to provide the end-user with information regarding the health and operation of sodium-based cell array 110 and/or the health and operation of battery assembly 102 and/or battery assembly 202.

In another optional embodiment, method 300 continues by calculating, utilizing a fuel gauge of the battery assembly, a state of charge of the sodium-based cell array, and updating the status information to include the state of charge. For example, processor 106 utilizes fuel gauge 208 to derive the state of charge of sodium-based cell array 110, and updates the status information provided to management system 128 (utilizing wireless interface 120) and/or the end-user (utilizing visual user interface 206) to further include the state of charge of sodium-based cell array 110.

In another optional embodiment, method 300 continues by storing 402 (see FIG. 4) in a memory of the battery assembly, a sodium-based charge algorithm, and communicating 404, utilizing an interface, with an external charger electrically coupled to a battery connector of the battery assembly to control charging of the sodium-based cell array based on the status information and the sodium-based charge algorithm. For example, processor 106 stores sodium-based charge algorithm 116 in memory 108, and communicates with charger 130 utilizing wireless interface 120 and/or wired interface 136 to control the charging of sodium-based cell array 110, as previously described with respect to FIGS. 1 and 2.

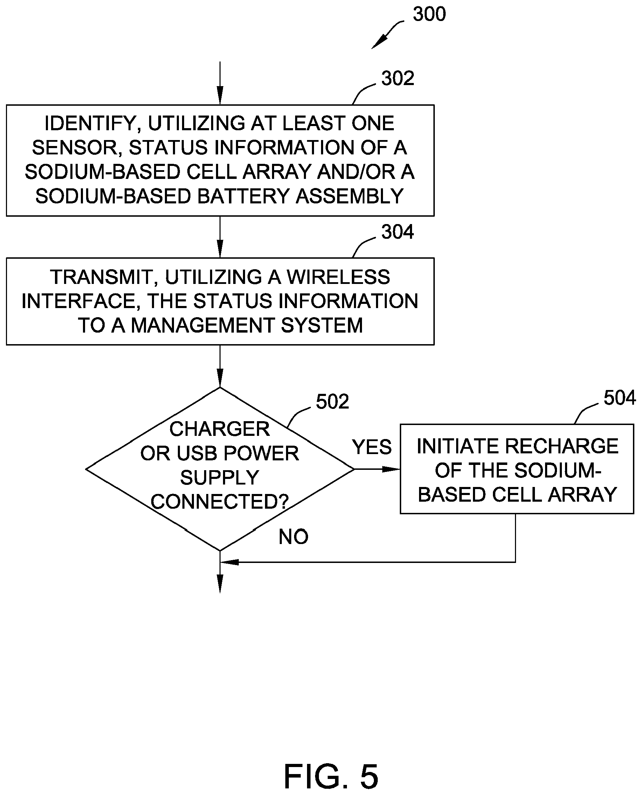

In another optional embodiment, method 300 continues by determining 502 (see FIG. 5) whether a charger is connected and initiating 504 a recharge process for the sodium-based cell array. The charger may include, for example, charger 130 and/or a USB power supply connected to USB connectors 214. In other embodiments, initiating the recharge process occurs if either charger 130 or the USB power supply is connected, and a trigger condition has occurred that indicates that sodium-based cell array 110 is due for a recharge. The trigger condition may include, for example, a pre-defined state of charge for sodium-based cell array 110, a pre-defined open circuit voltage and/or voltage under load for sodium-based cell array 110, etc. If the trigger condition occurs, then method 300 continues by initiating 504 a recharge process for sodium-based cell array 110.

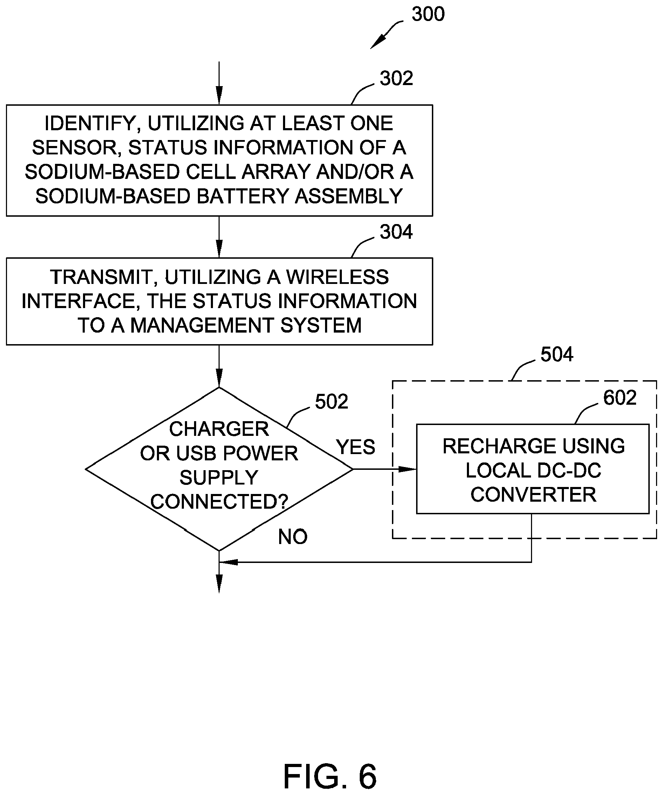

In continuing with this optional embodiment of method 300, initiating the recharge process may include recharging 602 (see FIG. 6) the sodium-based cell array using one or more DC-DC converters of the sodium-based battery assembly. For example, processor 106 varies the operation of DC-DC converters 210 to control the charge of sodium-based cell array 110 (e.g., when charger 130 simply provides a pre-defined voltage or voltage range at battery connector 126, and battery assembly 202 manages the charge of sodium-based cell array 110 utilizing sodium-based charge algorithm 116 as previously described). In other embodiments as discussed above, processor 106 communicates with charger 130 utilizing wireless interface 120 and/or wired interface 136 to control the charging of sodium-based cell array 110 based on the status information and sodium-based charge algorithm 116.

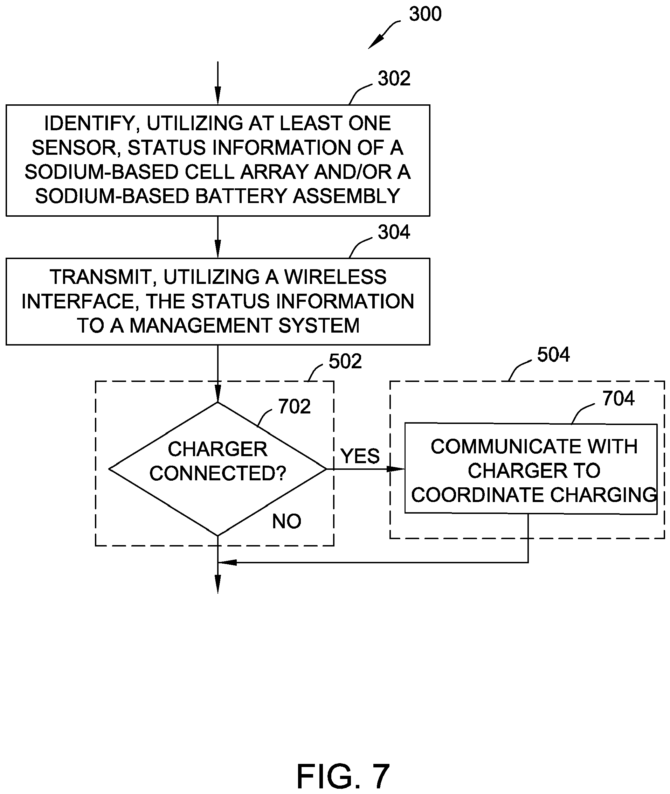

In continuing with this optional embodiment, when method 300 determines 702 (see FIG. 7) that an external charger is connected (e.g., to battery connector 126), method 300 initiates the recharge process by communicating 704 with the external charger in order to control the recharge of the sodium-based cell array. For example, processor 106 communicates with charger 130 utilizing wireless interface 120 and/or wired interface 136 to control the charging of sodium-based cell array 110 based on the status information and sodium-based charge algorithm 116. For example, as discussed above, processor 106 requests, utilizing wireless interface 120 and/or wired interface 136, that charger 130 provide a pre-defined voltage or voltage range for charging sodium-based cell array 110, with processor 106 controlling DC-DC converters 210 to charge sodium-based cell array 110 based on sodium-based charge algorithm 116. In another example, processor 106 requests, utilizing wireless interface 120 and/or wired interface 136, that charger 130 implement a pre-defined charging profile for sodium-based cell array 110, which is based on sodium-based charge algorithm 116.

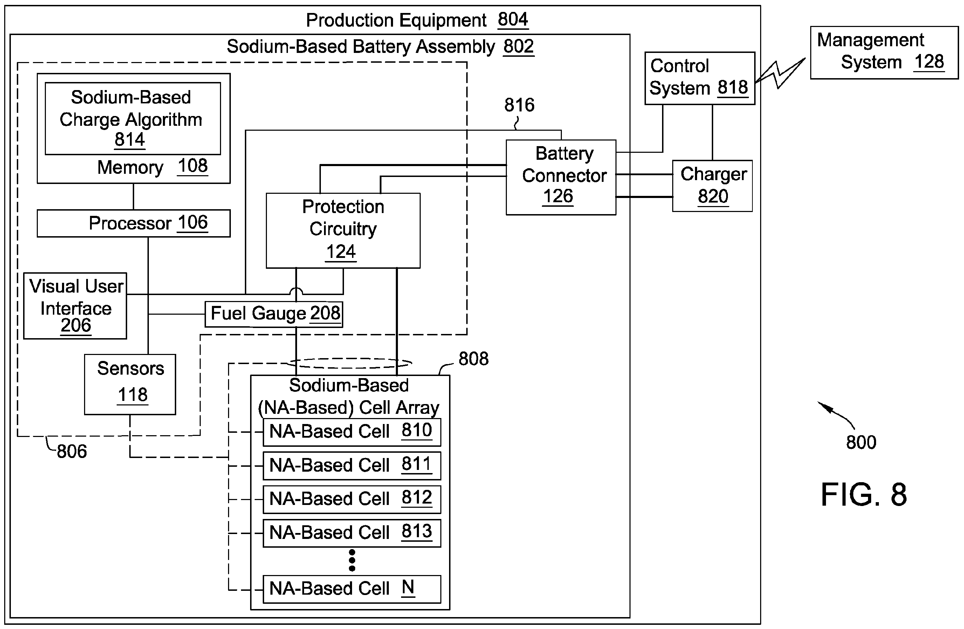

FIG. 8 depicts a block diagram of an audio/visual environment 800 that utilizes a sodium-based battery assembly 802 as a rechargeable power solution for production equipment 804 in another exemplary embodiment. Audio/visual environment 800 may comprise, for example, a photography studio, a film and/or television production environment, a performance environment (e.g., a concert), etc. Production equipment 804 comprises any component, system, or device that is utilized in audio/visual environment 800. Some examples of production equipment 804 include still cameras, video cameras, film cameras, lighting, teleprompters, robotic camera systems, robotic lighting systems, etc.

Battery assembly 802 comprises any component, system, or device that performs the functionality described herein for battery assembly 802. Battery assembly 802 will be described with respect to various discrete elements, which perform functions. These elements may be combined in different embodiments, segmented into different discrete elements in other embodiments, or removed in some embodiments.

In this embodiment, battery assembly 802 includes a controller 806, which manages the operation of battery assembly 802. In this embodiment, controller 806 includes processor 106, memory 108, sensors 118, protection circuitry 124, battery connector 126, visual user interface 206, and fuel gauge 208 that were previously described with respect to FIGS. 1 and 2, and these elements may operate in a similar manner as previously described for FIGS. 1 and 2.

In this embodiment, battery assembly 802 further includes a sodium-based cell array 808, which comprises one or more sodium-based cells 810, 811, 812, 813, N. In one embodiment, sodium-based cells 810, 811, 812, 813, N comprise sodium-ion cells. In another embodiment, sodium-based cells 810, 811, 812, 813, N comprise molten-sodium cells, sodium-sulfur cells, sodium-nickel chloride cells, or other types of cell chemistries that utilize sodium as an electrode material and/or charge carrier.

Sodium-based cells 810, 811, 812, 813, N may be fabricated utilizing any of the previously described anodes, cathodes, and electrolytes, or may be fabricated using other anodes, other cathodes, and/or other electrolytes not described but that are suitable for a sodium-based electrochemical cell. Sodium-based cells 810, 811, 812, 813, N may be electrically arranged in various series and/or parallel combinations in order to output a range of desired voltages and provide a desired energy storage capacity. Although five sodium-based cells 810, 811, 812, 813, N are disclosed in the current embodiment, any suitable number of sodium-based cells 810, 811, 812, 813, N may be included in battery assembly 802. Sodium-based cells 810, 811, 812, 813, N may, for example, comprise "18650" format cells that enable sodium-based cells 810, 811, 812, 813, N to be retrofitted within existing lithium-ion battery pack assemblies and/or nickel-metal hydride battery pack assemblies without significant mechanical changes to the battery pack assemblies, although the charging algorithms and/or the protections circuits may change due to the inherent differences between sodium-based cells 810, 811, 812, 813, N and lithium-ion cells and/or nickel-metal hydride cells.

In this embodiment, a sodium-based charge algorithm 814 is stored in memory 108 of controller 806. In this embodiment, at least, sodium-based charge algorithm 814 is used by processor 106 to manage and control the charge of sodium-based cell array 808. Sodium-based charge algorithm 814 may, for example, define the acceptable ranges of charge currents, charge voltages, charge temperatures, etc., for sodium-based cell array 808 during a charging operation. Sodium-based charge algorithm 814 may be similar to sodium-based charge algorithm 116 previously described with respect to FIGS. 1 and 2.

In this embodiment, battery assembly 802 further includes one or more sensors 118, protection circuitry 124, and a battery connector 126, which may operate similarly to sensors 118, protection circuitry 124, and battery connector 126 previously described with respect to FIGS. 1 and 2.

Sensors 118 of battery assembly 802 regularly monitor various dynamic parameters of sodium-based cell array 808 and the operational status of battery assembly 802. The collected information relating associated with the dynamic parameters and battery operational status is collectively, referred to the status information. The status information includes at least, the status information previously described for FIGS. 1 and 2 as applied to battery assembly 802 and/or cell array 808.

In this embodiment, battery assembly 802 communicates, utilizing an interface 816, with production equipment 804 of audio/visual environment 800 and/or with management system 128. Interface 816 may include one or more wired interfaces, wireless interfaces, and combination thereof. Interface 816 may include one or more of the configurations previously described for FIGS. 1 and 2 with respect to wireless interface 120 and/or interface 136.

Battery assembly 802 may communicate with production equipment 804 and provide, for example, the status information related to the health and operation of battery assembly 802 previously described above. In some embodiments, battery assembly 802 communicates with a control system 818 of production equipment 804, and coordinates the charging of sodium-based cell array 808 with control system 818 utilizing a charger 820 of production equipment 804. In other embodiments, charger 820 is external to both battery assembly 802 and production equipment 804 (e.g., charger 820 may operate similarly as charger 130 described with respect to FIGS. 1 and 2), and battery assembly 802 in these embodiments may communicate directly with charger 820 to coordinate the charging of sodium-based cell array 808. In some embodiments, control system 818 transmits at least a portion of the status information generated by battery assembly 802 to management system 128 of audio/visual environment 800. Management system 128 may operate similarly to management system 128 previously described with respect to FIGS. 1 and 2.

In some embodiments, control system 818 provides at least a portion of the status information to a user of production equipment 804, via, for example, a display of production equipment 804, not shown.

Protection circuitry 124 of battery assembly 802 protects sodium-based cell array 808 from various electrical hazards that may occur, including shorts, over charge conditions, over discharge conditions, excessive charge and/or discharge currents, etc. Protection circuitry 124 may operate similar to protection circuity 124 of FIGS. 1 and 2.

Generally, protection circuitry 124 is a high-bandwidth protection device that operates to quickly disconnect sodium-based cell array 808 from battery connector 126 (or other portions of controller 806) in the event of faults. As discussed above, the output impedance of sodium-based cell array 808 when sodium-ion is used is significantly lower than traditional lithium-ion batteries, and therefore, protection circuitry 124 is designed to be able to quickly detect high di/dt events and terminate the fault without damaging sodium-based cell array 808 or other components in the fault current path through battery assembly 802.

In some embodiments, battery connector 126 of battery assembly 802 provides an unregulated output voltage that substantially follows the voltage of sodium-based cell array 808, with the electrical path between battery connector 126 and sodium-based cell array 808 generally designed with as little resistance as possible (to reduce parasitic losses). In other embodiments, battery connector 126 of battery assembly 802 provides one or more regulated output voltages generated by one or more DC-DC converters, not shown.

Battery connector 126 may be connected to charger 820 of audio/visual environment 800 or production equipment 804 to recharge sodium-based cell array 808. In some embodiments, charger 820 and/or control system 818 communicate with processor 106 of controller 806 utilizing interface 816, which may be included as one or more pins on battery connector 126, in order to coordinate charging of sodium-based cell array 808. Interface 816 may comprise a 1-wire communication channel or a multi-wire communication channel in different embodiments. In some embodiments, interface 816 implements I2C-based protocols (e.g., SMB protocols). Interface 816 may operate similar to interface 136, as previously described with respect to FIGS. 1 and 2.

When charger 820 is electrically coupled to battery connector 126 during recharge, processor 106 communicates with charger 820 and/or control system 818 utilizing interface 816 to control the charging of sodium-based cell array 808 based on the status information and sodium-based charge algorithm 814. In one embodiment, processor 106 requests, utilizing interface 816, that charger 820 provide a pre-defined voltage or voltage range for charging sodium-based cell array 808, with processor 106 controlling a DC to DC converter of controller 806 (not shown) to charge sodium-based cell array 808 based on sodium-based charge algorithm 814. In another embodiment, processor 106 requests, utilizing interface 816, that charger 820 implement a pre-defined charging profile for sodium-based cell array 808, which is based on sodium-based charge algorithm 814. For example, processor 106 may transmit, utilizing interface 816, a unique ID to charger 820 and/or control system 818, which charger 820 and/or control system 818 may use to implement sodium-based charge algorithm 814 when charging sodium-based cell array 808. In another example, processor 106 may transmit, utilizing interface 816, sodium-based charge algorithm 814 to charger 820 and/or control system 818, and charger 820 and/or control system 818 may use sodium-based charge algorithm 814 to charge sodium-based cell array 808. In yet another example, processor 106 may transmit, utilizing interface 816, different requests to charger 820 and/or control system 818 over time that directs charger 820 and/or control system 818 to dynamically vary the charging current and/or the charging voltage supplied by charger 820 to battery connector 126 in order to follow, at least in part, sodium-based charge algorithm 814 when charging sodium-based cell array 808.

In some embodiments, battery assembly 802 further includes visual user interface 206 and fuel gauge 208. Visual user interface 206 and fuel gauge 208 may operate in a manner that is similar to visual user interface 206 and fuel gauge 208 as previously described with respect to FIG. 2.

Visual user interface 206 of battery assembly 802 provides an end-user of battery assembly 802 and/or production equipment 804 with the current status of battery assembly 802. Visual user interface 206 may provide some or all of the status information provided to production equipment 804 and/or management system 128 to the end-user. In some embodiments, visual user interface 206 includes one or more buttons (not shown) which allows the end-user to move through different displays of information regarding the status and operation of battery assembly 802. Visual user interface 206 may be accessible by the end-use while battery assembly 802 is mounted within production equipment 804 (e.g., battery assembly 802 may be partially exposed while mounted within production equipment 804, may be removable from production equipment 804, and/or may be accessible via a transparent cover, a movable door, etc., of production equipment 804).

Fuel gauge 208 of battery assembly 802 provides controller 806 information regarding the state of charge of sodium-based cell array 808. In some embodiments, fuel gauge 208 utilizes a charge counter to measure the charge added to and removed from sodium-based cell array 808, which is indicative of the state of charge of sodium-based cell array 808. In other embodiments, fuel gauge 208 utilizes other mechanisms to derive the state of charge of sodium-based cell array 808, such as the impedance of sodium-based cell array 808, the voltage of sodium-based cell array 808, etc. In some embodiments, processor 106 may calculate the state of charge of sodium-based cell array 808 using information from fuel gauge 208 along with other secondary factors, such as the charging efficiency of sodium-based cell array 808, which may vary over voltage and/or the number of charge-discharge cycles for sodium-based cell array 808, the temperature of sodium-based cell array 808, the discharge efficiency of sodium-based cell array 808, which may vary over voltage and/or the number of charge-discharge cycles for sodium-based cell array 808, etc. Thus, fuel gauge 208 in battery assembly 802 may operate in a manner that is similar to fuel gauge 208 as previously described with respect to FIGS. 1 and 2.

In some embodiments, battery assembly 802 is non-removable from production equipment 804 during normal operation of production equipment 804. For example, battery assembly 802 may be hard-wired into production equipment 804 and removable during service of production equipment 804. When battery assembly 802 is non-removable during normal operation, production equipment 804 may charge sodium-based cell array 808 using charger 820, which may also be part of production equipment 804. However, in other embodiments, even if battery assembly 802 is non-removable from production equipment 804 during normal operation of production equipment 804, charger 820 may be external to battery assembly 802 and production equipment 804, and charger 820 in these embodiments may be externally coupled to production equipment 804 in order to charge sodium-based cell array 808.

In another embodiment, battery assembly 802 is removable from production equipment 804 during normal operation of production equipment 804. For example, battery assembly 802 may be removably connected to production equipment 804 and removed when recharging sodium-based cell array 808. This may enable, for example, battery assembly 802 to be hot swapped with another battery during the operation of production equipment 804, with one of the batteries powering production equipment 804 while the other battery is being recharged by an external charger (e.g., charger 130 of FIGS. 1 and 2).

In some embodiments, battery assembly 802 includes one or more of the following components of battery assembly 202 (not shown): wireless interface 120, DC-DC converters 210, regulated output connectors 212, USB connectors 214, interface 136, and/or antenna 122, each of which may operate in a manner that is similar to what was described with respect to FIGS. 1 and 2 when, for example, interfacing with production equipment 804, and/or control system 818, and/or charger 820, and/or management system 128 (see FIG. 8), charging external devices via USB connectors 214 etc. For example, battery assembly 804 may be removable from production equipment 804, and when removed, provide some or all of the functionality previously described for battery assemblies 102, 202 when powering devices external to battery assembly 804.

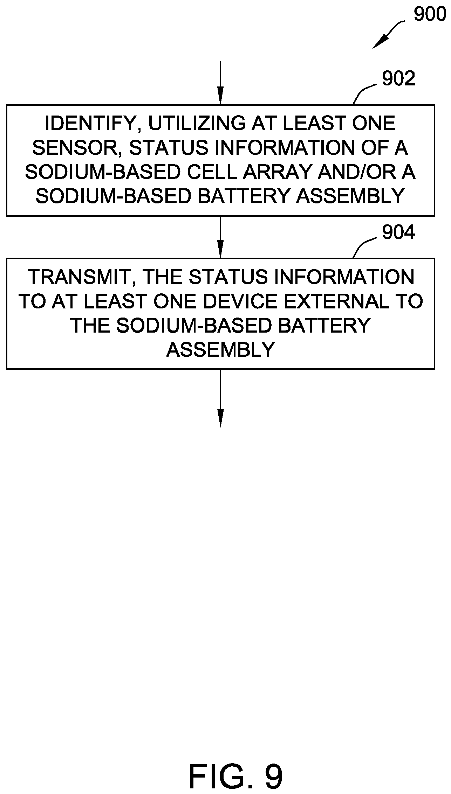

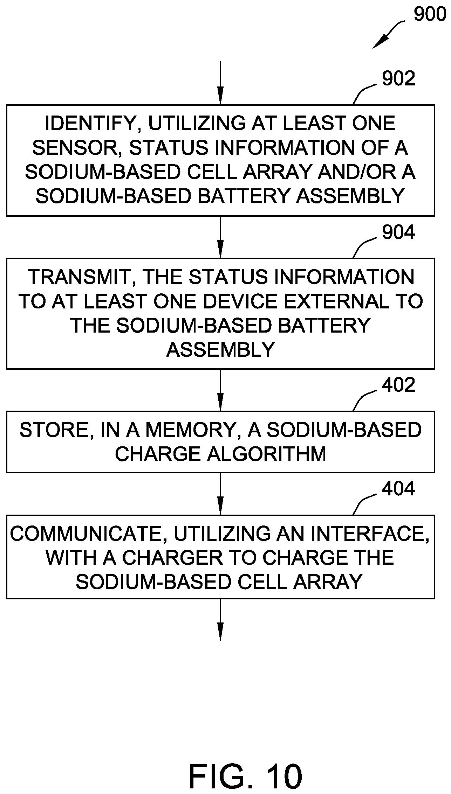

FIG. 9 depicts a flow chart of a method 900 operable by a sodium-based battery assembly of an audio/visual environment in an exemplary embodiment. FIGS. 10-12 depict additional details of method 900 in exemplary embodiments. Method 900 will be discussed with respect to FIGS. 1, 2, and 8, although method 900 may be performed by other systems, not shown.

In this embodiment, method 900 includes identifying 902, utilizing at least one sensor of a battery assembly, status information of at least one of a sodium-based cell array of the battery assembly and the battery assembly itself. For example, processor 106 utilizes sensors 118 to recover information regarding the health and operation of battery assemblies 102, 202, 802, and/or sodium-based cell arrays 110, 808 (see FIGS. 1, 2, and 8). The status information may include any of the status information previously described.

Method 900 further includes transmitting 904 the status information to at least one device external to the sodium-based battery assembly. For example, processor 106 utilizes wireless interface 120 to transmit the status information to management system 128 (see FIGS. 1 and 2). In addition to or instead of, processor 106 utilizes interface 816 to transmit the status information to control system 818 of production equipment 804 (see FIG. 8). In some embodiments, control system 818 forwards the status information to management system 128. In some embodiments, processor 106 and/or control system 818 provides at least a portion of the status information to a user via user interface 206, via a display of production equipment 804, not shown, etc. In other embodiments, battery assembly 802 includes wireless interface 120 (not shown), and processor 106 of battery assembly 802 utilizes wireless interface 120 to transmit the status information to management system 128

In an optional embodiment, method 900 includes displaying, utilizing a visual user interface of the battery assembly, at least a portion of the status information to an end-user. For example, processor 106 utilizes visual user interface 206 to provide the end-user with information regarding the health and operation of sodium-based cell array 808 and/or the health and operation of battery assembly 802.

In another optional embodiment, method 900 further includes calculating, utilizing a fuel gauge of the battery assembly, a state of charge of the sodium-based cell array, and updating the status information to include the state of charge. For example, processor 106 utilizes fuel gauge 208 to derive the state of charge of sodium-based cell array 808, and updates the status information provided to control system 818 (utilizing interface 816) and/or the end-user (utilizing visual user interface 206) to further include the state of charge of sodium-based cell array 808.

In another optional embodiment, method 900 further includes storing 402 (see FIG. 10 and prior discussion regarding FIG. 4) in at least one memory of the battery assembly, a sodium-based charge algorithm, and communicating 404 (see FIG. 10 and prior discussion regarding FIG. 4) with a charger electrically coupled to a battery connector of the battery assembly to control charging of the sodium-based cell array based on the status information and the sodium-based charge algorithm. For example, processor 106 stores sodium-based charge algorithm 814 in memory 108, and communicates with charger 820 utilizing interface 816 (e.g., via wired or wireless mechanisms) to control the charging of sodium-based cell array 808 based on the status information of sodium-based cell array 808 and/or battery assembly 802, as previously described with respect to FIG. 8.

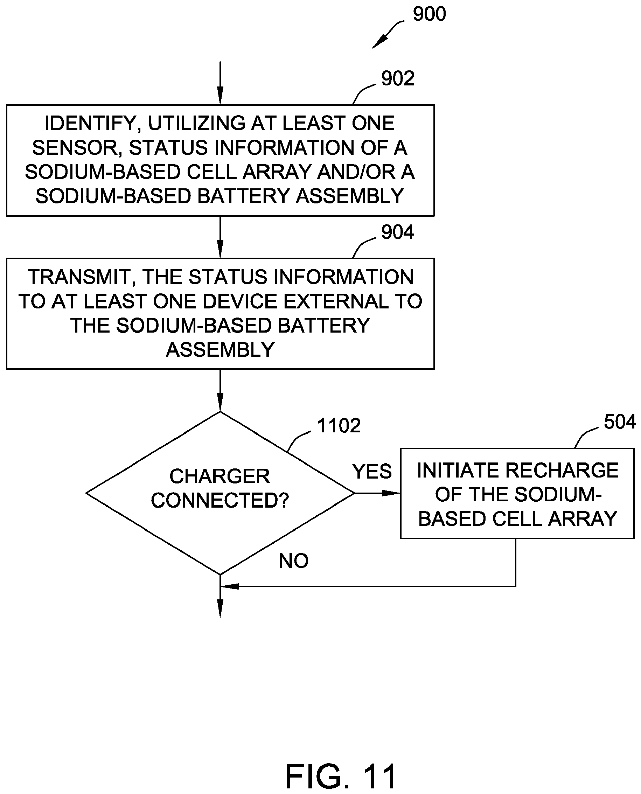

In another optional embodiment, method 900 further includes determining 1102 (see FIG. 11) whether a charger is connected to the battery assembly, and initiating 504 (see FIG. 11 and prior discussion regarding FIG. 5) a recharge process for the sodium-based cell array in response to determining that the charge is connected. For example, processor 106 determines that charger 820 is connected to battery connector 126, and processor 106 initiates a recharge process for cell array 808. In some embodiments, initiating the recharge process occurs if charger 820 is connected and a trigger condition has occurred that indicates that sodium-based cell array 808 is due for a recharge. The trigger condition may include, for example, a pre-defined state of charge for sodium-based cell array 808, a pre-defined open circuit voltage and/or voltage under load for sodium-based cell array 808, a communication from processor 106 to control system 818 via interface 816, a communication from processor 106 to charger 820 via interface, etc. If the trigger condition occurs, then method 900 continues by initiating 504 the recharge process for sodium-based cell array 808. In another embodiment, control system 818 electrically connects charger 820 to battery connector 126 to initiate the charging of cell array 808.

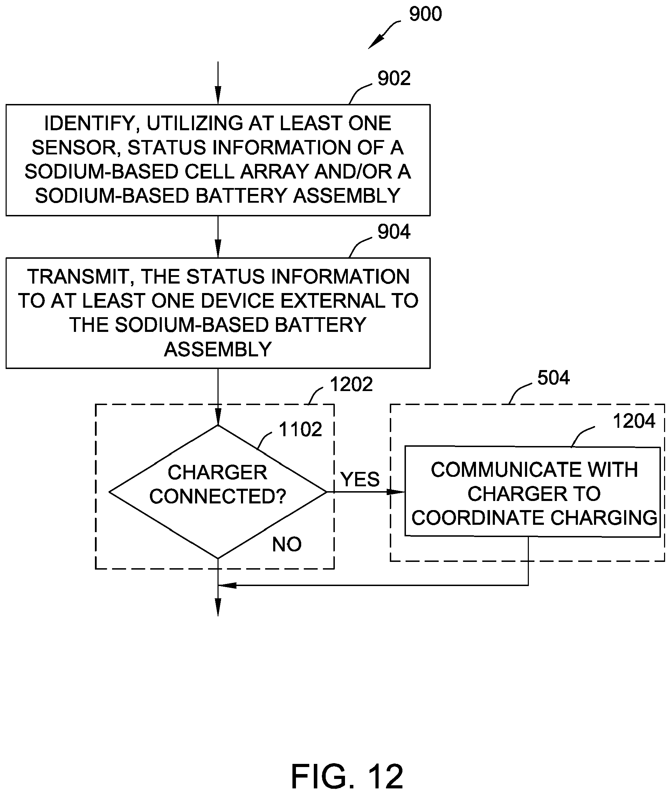

In continuing with this optional embodiment, when method 900 further includes determining 1202 (see FIG. 12) that a charger is connected (e.g., to battery connector 126), method 900 further includes initiating the recharge process by communicating 1204 with the charger and/or the production equipment in order to control the recharge of the sodium-based cell array. For example, processor 106 communicates with charger 820 and/or control system 818 of production equipment 804 utilizing interface 816 to control the charging of sodium-based cell array 808 based on the status information and sodium-based charge algorithm 814. For example, as discussed above, processor 106 requests, utilizing interface 816, that charger 820 and/or control system 818 provide a pre-defined voltage or voltage range for charging sodium-based cell array 808, with processor 106 controlling DC-DC converters of battery assembly 802 (not shown) to charge sodium-based cell array 808 based on sodium-based charge algorithm 814. In another example, processor 106 requests, utilizing interface 816, that charger 820 and/or control system 818 implement a pre-defined charging profile for sodium-based cell array 808, which is based on sodium-based charge algorithm 814.

An example technical effect of the embodiments described herein includes at least one of: (a) improving the performance of rechargeable battery systems utilizing sodium-based cells rather than other cell chemistries, such as lithium-ion; (b) implementing custom charging algorithms for sodium-ion cells; and (c) providing the ability to retrofit existing products that currently use lithium-ion or other cell chemistries by implementing high bandwidth protection circuits and new charging algorithms, in order to support faster charge and discharge rates that are available due to the lower impedance of sodium-ion cells as compared to other cell chemistries.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

**1.** An audio/visual environment (100, 200, 800), comprising:
a sodium-based battery assembly (102, 202, 802), comprising:
a sodium-based cell array (110, 808) comprising at least one sodium-based cell (112, 113, 114, 810, 811, 812, 813, N), wherein the at least one sodium-based cell is configured to utilize sodium ions as charge carriers during charge and discharge;
a battery connector (126) configured to electrically connect the sodium-based cell array with devices external to the sodium-based battery assembly;
at least one interface (120, 136, 816);
protection circuitry (124) electrically coupling the battery connector to the sodium-based cell array, wherein the protection circuitry is configured to electrically decouple the sodium-based cell array from the battery connector in response to an electrical fault;
at least one sensor (118) configured to measure status information of at least one of the sodium-based cell array and the sodium-based battery assembly; and
at least one processor (106) configured to:
identify, utilizing the at least one sensor, the status information; and
transmit, utilizing the at least one interface, the status information to at least one device external to the sodium-based battery assembly.

**2.** The audio/visual environment of claim 1, further comprising:
a management system (128),
wherein the at least one interface comprises a wireless interface (120), and
wherein the management system comprises the at least one device external to the sodium-based battery assembly.

**3.** The audio/visual environment of claim 1 or 2, further comprising:
a charger (130, 820) electrically coupled with the battery connector,
wherein the at least one interface comprises a wired interface (136, 816),
wherein the sodium-based battery assembly further comprises:
a memory (108) configured to store a sodium-based charge algorithm (116, 814), and
wherein the at least one processor is further configured to communicate, utilizing at least one of the wireless interface and the wired interface, with the charger to control charging of the sodium-based cell array based on the status information and the sodium-based charge algorithm.

**4.** The audio/visual environment of any one of claims 1 to 3, wherein:
the sodium-based battery assembly further comprises:
a visual user interface (206), and
the processor is further configured to display, utilizing the visual user interface, the status information to an end-user.

**5.** The audio/visual environment of any one of claims 1 to 4, wherein:
the sodium-based battery assembly further comprises:
a fuel gauge (208) for the sodium-based cell array, and
the at least one processor is further configured to:
calculate, utilizing the fuel gauge, a state of charge of the sodium-based cell array; and
update the status information to include the state of charge.

**6.** The audio/visual environment of claim 5, wherein:
the fuel gauge is configured to derive the state of charge of the sodium-based cell array based on an impedance of the sodium-based cell array.

**7.** The audio/visual environment of any one of claims 1 to 6, wherein:
the sodium-based battery assembly further comprises:
at least one regulated output connector (212); and
at least one direct current (DC) to DC converter (210) electrically coupled to the sodium-based cell array and the at least one regulated output connector, wherein the at least one DC-DC converter is configured to generate one or more pre-defined output voltages at the at least one regulated output connector.

**8.** The audio/visual environment of claim 7, wherein:
the sodium-based battery assembly further comprises:
at least one universal serial bus (USB) connector (214) electrically coupled to the at least one DC-DC converter, wherein the at least one USB connector is configured to charge at least one external USB device coupled thereto utilizing the at least one DC-DC converter.

**9.** The audio/visual environment of claim 8, wherein:
the at least one USB connector is configured to receive electrical power from a device external to the sodium-based battery assembly to charge, utilizing the at least one DC-DC converter, the sodium-based cell array.

**10.** The audio/visual environment of any one of claims 1 to 9, wherein:
the status information comprises at least one of a voltage of the sodium-based cell array, a charge current of the sodium-based cell array, a discharge current of the sodium-based cell array, a time to charge the sodium-based cell array, a time to discharge the sodium-based cell array, a number of charge-discharge cycles of the sodium-based cell array, a cell voltage of the at least one sodium-based cell, a temperature of the sodium-based cell array, and a protection activation history of the protection circuitry.

**12.** The audio/visual environment of any one of claims 1 to 11, further comprising:
production equipment (804),
wherein the sodium-based battery assembly is configured to be disposed within the production equipment, and
wherein the production equipment comprises the at least one device external to the sodium-based battery assembly.

**13.** A method (900) operable by a sodium-based battery assembly (102, 202, 802) of an audio/visual environment (100, 200, 800), wherein:
the sodium-based battery assembly comprises:
a sodium-based cell array (110, 808) comprising at least one sodium-based cell (112, 113, 114, 810, 811, 812, 813, N), wherein the at least one sodium-based cell is configured to utilize sodium ions as charge carriers during charge and discharge;
a battery connector (126) configured to electrically connect the sodium-based cell array with devices external to the sodium-based battery assembly;
at least one interface (120, 136, 816);
protection circuitry (124) electrically coupling the battery connector to the sodium-based cell array, wherein the protection circuitry is configured to electrically decouple the sodium-based cell array from the battery connector in response to an electrical fault; and
at least one sensor (118) configured to measure status information of at least one of the sodium-based cell array and the sodium-based battery assembly, and
the method comprises:
identifying (902), utilizing the at least one sensor, the status information; and
transmitting (904), utilizing the at least one interface, the status information to at least one device external to the sodium-based battery assembly.

**14.** The method of claim 13, wherein the audio/visual environment further comprises:
a management system (128),
wherein the at least one interface comprises a wireless interface (120),
wherein the management system comprises the at least one device external to the sodium-based battery assembly, and
wherein transmitting, utilizing the at least one interface, the status information to the at least one device external to the sodium-based battery assembly further comprises:
transmitting (304, 904), utilizing the wireless interface, the status information to the management system.

**15.** The method of claim 13 or 14, wherein:
the audio/visual environment further comprises:
a charger (130, 820) electrically coupled to the battery connector,
the at least one interface comprises a wired interface (136, 816),
the sodium-based battery assembly further comprises:
a memory (108), and
the method further comprises:
storing (402), in the memory, a sodium-based charge algorithm; and
communicating (404), utilizing at least one of the wireless interface and the wired interface, with the charger to control charging of the sodium-based cell array based on the status information and the sodium-based charge algorithm.
